# FASCICULE DE BREVET EUROPEEN

(11) **EP 4 606 215 B1**
(45) Date de publication et mention de la délivrance du brevet: **13.05.2026**
(21) Numéro de dépôt: 25305148.6
(22) Date de dépôt: 31.01.2025
(51) Int. Cl.: A01K 45/00, B07C 5/342, B07C 5/36

(54) **INSTALLATION ET PROCEDE POUR LA DETERMINATION AUTOMATIQUE DU SEXE D'UN POUSSIN**
ANLAGE UND VERFAHREN ZUR AUTOMATISCHEN GESCHLECHTSBESTIMMUNG EINES PÄSINS
SYSTEM AND METHOD FOR AUTOMATICALLY DETERMINING THE SEX OF A CHICK

(30) Priorité: 20.02.2024 FR 2401671
(43) Date de publication de la demande: 27.08.2025
(73) Titulaire: Egg-Chick Automated Technologies, 29800 Plouédern (FR)
(72) Inventeur: SALAUN, Damien, 29800 PLOUEDERN (FR); CHANU, Romaric, 29800 PLOUEDERN (FR)
(74) Mandataire: Plasseraud IP

(56) Documents cités:
- EP-A1- 1 092 347
- US-B2- 11 690 358

## Description

### Domaine technique

La présente invention concerne une installation et un procédé pour déterminer automatiquement le sexe d'un poussin.

### Technique antérieure

Le sexage des poussins est une étape importante dans l'industrie avicole, permettant de distinguer les poussins mâles des femelles dès leur éclosion.

Une telle différentiation précoce des poussins est nécessaire pour optimiser leur élevage en adaptant les pratiques de gestion à chaque groupe de poussins de même sexe, ce qui contribue à améliorer l'efficacité et la rentabilité des exploitations avicoles.

Il est bien connu que des opérateurs expérimentés sont en mesure de discerner des détails subtils, leurs permettant de distinguer les poussins mâles des femelles dès les premières heures de vie des poussins.

Parmi les méthodes pour sexer un poussin, il est courant d'observer les plumes des extrémités des ailes d'un poussin, de préférence ayant moins d'un jour, voire deux jours d'âge, pour des raisons de fiabilité.

Le sexage du poussin par les ailes est en effet lié à un agencement différent des plumes aux extrémités des ailes chez la femelle et chez le mâle.

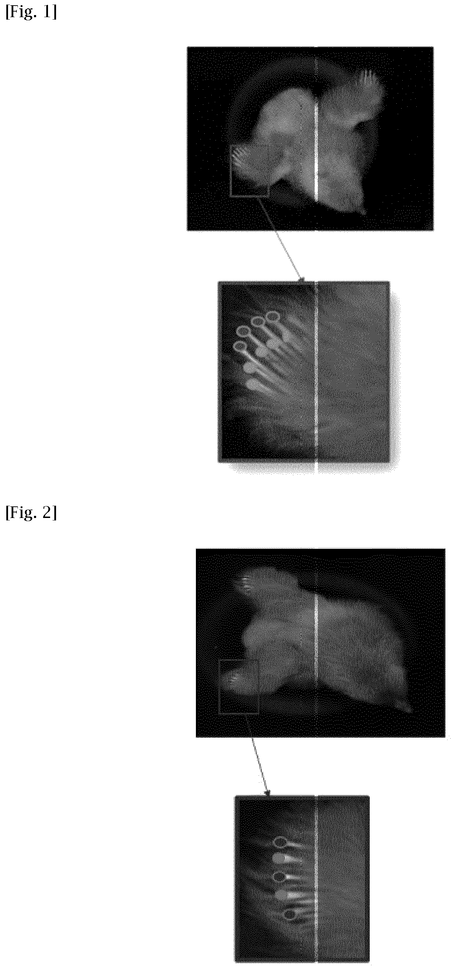

Comme illustré sur les Figures 1 (femelle) et 2 (mâle), au bout des ailes d'un poussin, on peut observer deux rangées de plumes, les rémiges primaires et les plumes de couverture primaires.

Alors que chez le mâle, les plumes de couverture primaires sont plus longues, ou sensiblement de même dimension, que les rémiges primaires, chez la femelle, l'extrémité des plumes de couverture primaires est toujours plus courte que l'extrémité des rémiges primaires.

Cette méthode de détermination du sexe d'un poussin est relativement rapide et non invasive.

Toutefois, lorsqu'il s'agit de différencier plusieurs milliers de poussins à l'heure, chaque jour, avec une faible marge d'erreur, comme cela est pratiqué dans l'élevage intensif de poules pondeuses, ces opérations peuvent se révéler fastidieuses pour les opérateurs qualifiés.

En outre, il est aujourd'hui difficile de trouver en nombre des travailleurs spécialisés dans ce domaine ce qui rend cette étape nécessaire relativement coûteuse.

Des méthodes de sexage automatique de poussins sont également connues de l'état de l'art.

Le brevet FR 2 892 599 B1 au nom de la présente demanderesse divulgue ainsi un système de sexage automatique de poussins mettant en œuvre une caméra pour acquérir des images des extrémités des ailes d'un poussin exposé à une lumière bleue et identifier par analyse de ces images, les agencements caractéristiques des plumes du mâle ou de la femelle.

Afin d'assurer un contrôle individuel de chaque poussin, ces derniers sont positionnés dans des godets disposés en ligne, avec leurs ailes maintenues écartées par le repos de celles-ci sur le rebord de leur godet respectif.

Bien que donnant de bons résultats, les ailes étant stables et donc aisément imagées, cette méthode de sexage automatique de poussins peut encore être améliorée.

En effet, cette machine est relativement encombrante et complexe quant à sa maintenance.

Par ailleurs, cette machine n'autorise pas de hautes cadences de traitement, lesquelles sont cependant aujourd'hui recherchées dans l'élevage intensif de volailles.

On connaît également par la demande de brevet EP 1 092 347 A1, une méthode de détermination du sexe d'un poussin dans laquelle on fait perdre l'équilibre au poussin pour l'amener à déployer volontairement ses ailes, puis on éclaire au moins une aile ainsi déployée et on photographie ladite au moins une aile ainsi déployée en vue de déterminer le sexe de ce poussin.

Le déséquilibre du poussin peut résulter de divers stimuli, tels que l'incitation à sauter, le secouage du poussin ou le placement du poussin à proximité d'une source de choc acoustique ou d'une source de chaleur, ou encore son déplacement sur une surface vibrante.

Toutefois, et d'après l'enseignement de ce document, une fois que les ailes du poussin sont déployées, celles-ci interagissent physiquement avec un ou plusieurs supports afin de les stabiliser en position déployée pendant l'éclairement de leurs extrémités et la capture d'images.

Cette interaction physique avec des objets rigides intervient alors que le poussin est en déplacement rapide à travers le dispositif de détermination du sexe d'un poussin, ce qui augmente le risque de blessures de ce dernier, potentiellement mortelles.

En outre, il est constaté que le procédé qui implique de faire vibrer une bande transporteuse sur laquelle le poussin est transporté, afin de l'amener à déployer ses ailes, nécessite des fréquences de vibration élevées.

Par conséquent, l'animal est soumis non seulement à des vibrations tout au long de son déplacement sur la bande transporteuse, mais aussi à des niveaux élevés de bruits mécaniques.

Le bien-être de l'animal en est sérieusement affecté.

Il existe donc un besoin pressant pour une installation et un procédé pour la détermination automatique du sexe d'un poussin, dont la conception originale permette de surmonter les inconvénients de l'art antérieur exposés ci-dessus.

### Objet de l'invention

La présente invention vise à pallier les inconvénients de l'art antérieur en proposant une installation et un procédé pour la détermination automatique du sexe d'un poussin, simples dans leur conception et dans leur mode opératoire, permettant d'assurer le bien-être de l'animal et de préserver sa santé.

Un autre objet de la présente invention est une telle installation et un tel procédé de détermination automatique du sexe d'un poussin autorisant des cadences de traitement extrêmement rapides, et à titre illustratif, supérieures à 70 000 poussins à l'heure.

Encore un objet de la présente invention est une telle installation et un tel procédé de détermination automatique du sexe d'un poussin garantissant un taux de résolution le plus élevé dans la détermination du sexe du poussin et une fiabilité accrue.

### Exposé de l'invention

A cet effet, l'invention concerne une installation pour déterminer automatiquement le sexe d'un poussin, comprenant :
- un convoyeur à bande comprenant une bande transporteuse, de préférence souple, sous tension pour transporter de manière libre ledit poussin, ladite bande transporteuse définissant une direction de déplacement,
- un dispositif pour déséquilibrer le poussin et l'amener à déployer volontairement ses ailes lors de son déplacement le long d'au moins une partie dudit convoyeur à bande,
- au moins une source de lumière pour éclairer les ailes du poussin ainsi déployées,

- au moins un dispositif d'imagerie pour capturer une ou plusieurs images des ailes du poussin ainsi éclairées,
- une unité centrale configurée pour traiter les images acquises par ledit au moins un dispositif d'imagerie afin d'isoler sur au moins certaines de ces images l'extrémité d'au moins une des ailes dudit poussin, analyser la configuration des plumes à ladite au moins une extrémité et déterminer à partir de cette configuration s'il s'agit d'un poussin mâle ou femelle ou encore si le sexe est indéterminé.

Selon l'invention, ledit dispositif pour déséquilibrer le poussin et l'amener à déployer volontairement ses ailes comporte au moins une came rotative placée sous ladite bande transporteuse, chaque came étant entraînée en rotation autour d'un axe placé transversalement, ou sensiblement transversalement, par rapport à ladite direction de déplacement, ladite came étant conformée pour entrer périodiquement en contact avec ladite bande transporteuse et soulever ainsi une partie de celle-ci lors de ce contact.

De manière avantageuse, la conception originale de cette installation de détermination automatique du sexe d'un poussin garantit un déplacement libre du poussin, dans un environnement moins bruyant et moins stressant, ce qui contribue au bien-être de celui-ci.

Cette installation autorise avantageusement des cadences élevées de traitement automatique typiquement supérieures à 70 000 poussins à l'heure, voire supérieur à 90 000 poussins à l'heure.

On entend par l'expression « transporter de manière libre ledit poussin » que ce dernier est transporté sans contrainte, en étant uniquement porté par la bande transporteuse lors de son déplacement le long du convoyeur. Ainsi, lorsque le poussin est en équilibre, il est généralement en contact uniquement avec cette bande, par le biais de ses pattes.
De même, lorsque le poussin déploie ses ailes sous l'effet d'un stimulus provoquant son déséquilibre, il n'est pas prévu de supports externes, telles que des rampes placées latéralement à la bande transporteuse, pour que ces ailes déployées reposent dessus.

Chaque came rotative permet donc de soulever temporairement, ou encore momentanément, une partie de la bande transporteuse lors de sa mise en contact avec celle-ci, pour former une surélévation, avantageusement localisée, de cette bande transporteuse, telle qu'une bosse ou en fonction du nombre et du positionnement respectif d'au moins deux cames, un plateau surélevé par rapport au reste la surface externe de la bande transporteuse. La configuration du reste de la surface de la bande transporteuse placé à distance de ladite au moins une came rotative reste inchangée.

Bien entendu, en fonction de l'écartement entre deux cames rotatives adjacentes, il est possible que la surface de la bande transporteuse placée entre deux zones de cette bande en contact direct avec ces cames rotatives, soit elle-même surélevée.

De manière avantageuse, les inventeurs ont constaté que la formation ou la disparition de cette ou ces surélévations temporaires permettait de déséquilibrer le poussin, l'amenant à déployer ses ailes. Cet objectif est atteint tout en garantissant un transport sans stress pour l'animal et sans danger pour sa santé.

Le stimulus provoquant l'ouverture des ailes du poussin résulte ainsi d'un déséquilibre de ce dernier causé par un changement localisé de configuration de la bande transporteuse, et notamment par la génération d'une surélévation telle qu'une bosse ou un plateau surélevé, ou encore par la disparition de cette surélévation.
De préférence, la hauteur de cette surélévation est comprise entre 10 mm et 35 mm, de préférence, entre 15 mm et 30 mm, et de manière encore plus préférentielle, entre 17 mm et 25 mm par rapport au reste de la surface externe de la bande transporteuse.

En jouant sur le nombre de cames mises en œuvre et la fréquence de rotation de ces dernières, le maintien des ailes déployées du poussin est observé sur une période de temps suffisante pour l'éclairement et la capture d'une pluralité d'images de ces dernières.

Selon un mode de réalisation de cette installation pour déterminer automatiquement le sexe d'un poussin, chaque came comporte au moins une zone de profil actif, lesdites zones de profil actif entrant en contact avec ladite bande transporteuse l'une après l'autre pendant la rotation de la came correspondante lorsqu'elle sont plusieurs, ladite ou lesdites zones de profil actif de ladite came étant conformées pour garantir que cette dernière reste hors de contact avec cette bande transporteuse pendant au moins une partie de sa rotation.
De manière avantageuse, chaque zone de profil actif peut de plus être équipée de roulements à bille pour diminuer les frottements avec ladite bande transporteuse entrainée en rotation.

Selon un autre mode de réalisation de cette installation pour déterminer automatiquement le sexe d'un poussin, chaque came comporte au moins une zone de profil actif arrondie, telle que semi-cylindrique.
De préférence, la ou les cames sont conformées pour soulever la partie de bande transporteuse d'une hauteur comprise entre 17 mm et 25 mm.
Cette came peut encore comporter deux zones de profil actif, entrant alternativement en contact avec ladite bande transporteuse. Par exemple, la came peut comporter un corps renfermant l'axe et les roulements et une cage, cette cage comportant une branche antérieure et une branche postérieure reliées au corps par des bras, chacune de ces branches ayant un profil arrondi.

Selon encore un autre mode de réalisation de cette installation pour déterminer automatiquement le sexe d'un poussin, elle comporte deux cames rotatives, placées sous ladite bande transporteuse en étant espacées l'une de l'autre le long de la direction de déplacement définie par ledit convoyeur, chacune de ces cames étant entraînée en rotation autour d'un axe placé transversalement, ou sensiblement transversalement, par rapport à ladite direction de déplacement, chaque came étant conformée pour entrer périodiquement en contact avec ladite bande transporteuse et soulever ainsi une partie de celle-ci lors de ce contact de manière à amener ledit poussin à déployer volontairement ses ailes lorsque ce dernier se trouve dans ladite partie de bande transporteuse ainsi soulevée.

Selon encore un autre mode de réalisation de cette installation pour déterminer automatiquement le sexe d'un poussin, lesdites cames placées sous la même bande transporteuse étant identiques, ladite installation est configurée pour faire fonctionner celles-ci de manière synchrone afin de soulever en même temps, ou encore simultanément, une partie de la bande transporteuse. Alternativement, ladite installation peut encore être configurée pour faire fonctionner ces cames rotatives identiques, placées sous une même bande transporteuse, de manière asynchrone.

Selon encore un autre mode de réalisation de cette installation pour déterminer automatiquement le sexe d'un poussin, lesdites cames, placées sous une même bande transporteuse, sont différentes, ladite installation étant configurée pour faire fonctionner celles-ci de manière synchrone. Alternativement, ladite installation peut être configurée pour faire fonctionner ces cames rotatives de manière asynchrone.

Selon encore un autre mode de réalisation de cette installation pour déterminer automatiquement le sexe d'un poussin, le châssis dudit convoyeur à bande est configuré de sorte que ladite bande transporteuse soit conduite en forme d'auge pour centrer automatiquement ledit poussin lors de son transport. Ainsi, lorsque la portion de la bande transporteuse redescend après avoir été soulevée par la ou les cames, cette portion reprend sa forme en auge, ce qui permet de recentrer le poussin sur la bande transporteuse et d'éviter que ce dernier n'interagisse physiquement avec les rives du convoyeur.

Selon encore un autre mode de réalisation de cette installation pour déterminer automatiquement le sexe d'un poussin, ladite première came et ladite deuxième came sont espacées l'une de l'autre et conformées pour déplacer la partie de la bande transporteuse placée entre lesdites cames entre une configuration libre, ou sans contact, en forme d'auge et une configuration soulevée à plat, ou sensiblement à plat, pour que ledit poussin suive au moins partiellement une trajectoire rectiligne ou sensiblement rectiligne.
Ces cames rotatives peuvent ainsi être agencées pour que la bande transporteuse souple soit tendue entre ces dernières.
Avantageusement, il a été observé qu'une telle configuration de la partie de bande transporteuse placée entre les cames garantissait une acquisition optimale des images du poussin, notamment de l'extrémité de ses ailes, le poussin opérant alors un déplacement sensiblement horizontal, c'est-à-dire à une élévation constante, ou sensiblement constante, sous la ou les caméras. On constate alors que les images capturées sont parfaitement nettes.

Selon encore un autre mode de réalisation de cette installation pour déterminer automatiquement le sexe d'un poussin, chaque came est configurée pour lors de sa rotation, soulever une partie de ladite bande transporteuse et transmettre une impulsion audit poussin placée sur ladite partie de bande transporteuse afin de propulser ce dernier en l'air au-dessus de ladite bande transporteuse.
Dans un mode de réalisation avantageux, on peut chercher à ce que le poussin décolle le moins possible suite au soulèvement de la bande transporteuse par la ou les cames, voire amortisse simplement avec ses pattes le changement de configuration de la bande transporteuse.
Dans un mode de réalisation particulièrement avantageux, on peut chercher à ce que le poussin se trouve en sustentation au-dessus de la surface externe de la bande transporteuse.
Lesdites cames rotatives de l'installation sont alors configurées pour provoquer la sustentation du poussin au-dessus de la partie de la bande transporteuse ainsi soulevée.
On entend ici par « sustentation », le fait que le poussin s'adapte à la variation de hauteur de la bande transporteuse ainsi soulevée en compensant avec ses pattes et en ouvrant ses ailes pour chercher à s'équilibrer dans ce déséquilibre constant. Il donne alors l'impression d'avancer sur le convoyeur à hauteur sensiblement constante, laquelle reste supérieure au niveau le plus bas de la bande transporteuse ainsi soulevée.

Selon encore un autre mode de réalisation de cette installation pour déterminer automatiquement le sexe d'un poussin, ledit convoyeur est horizontal.

Selon encore un autre mode de réalisation de cette installation pour déterminer automatiquement le sexe d'un poussin, ladite ou au moins une des sources de lumière est configurée pour émettre une lumière bleue.
De manière avantageuse, ladite ou au moins une des sources de lumière est configurée pour émettre une lumière violette à une longueur d'onde comprise entre 380 nm et 420 nm, et encore mieux, de la lumière violette à une longueur d'onde centrée sur 405 nm.

Selon encore un autre mode de réalisation de cette installation pour déterminer automatiquement le sexe d'un poussin, chaque dispositif d'imagerie est une caméra matricielle pour détecter au moins la lumière visible réfléchie par ledit poussin lorsqu'il est éclairé par ladite au moins une source de lumière.

De préférence, ledit convoyeur comportant deux cames rotatives et deux caméras matricielles espacées le long dudit convoyeur, le champ de vision d'une première desdites caméras couvre une première zone de la bande transporteuse dont au moins une majorité est placée en aval de la première came rotative, la position « aval » étant considérée par rapport au sens de transport du poussin le long dudit convoyeur, et le champ de vision d'une deuxième caméra couvre une deuxième zone de la bande transporteuse recouvrant ou non une partie de ladite première zone de bande transporteuse, une portion de ladite deuxième zone de la bande transporteuse ainsi imagée étant placée en aval de la seconde came rotative.
Il est ainsi possible de réaliser un tracking individuel de chaque poussin jusqu'à la sortie du convoyeur et par conséquence, de garantir un suivi du traitement approprié de chaque poussin.
Au moins la première caméra couvre ainsi une majorité de la partie de la bande transporteuse située entre les portions de la bande transporteuse en contact avec les cames rotatives.

Selon encore un autre mode de réalisation de cette installation pour déterminer automatiquement le sexe d'un poussin, ledit convoyeur comporte dans sa zone de sortie, un dispositif d'éjection du poussin configuré pour envoyer ce dernier vers un premier convoyeur de traitement ou vers un second convoyeur de traitement distinct du premier, en fonction du sexe du poussin identifié lors du traitement desdites images.

De préférence, le champ de vision de la deuxième caméra couvre également ladite zone de sortie dudit convoyeur pour assurer un suivi individuel du poussin au moins jusqu'à son arrivée, ou passage, au niveau du dispositif d'éjection.

Selon encore un autre mode de réalisation de cette installation pour déterminer automatiquement le sexe d'un poussin, elle comprend au moins deux convoyeurs à bande disposés parallèlement l'un à l'autre pour traiter plusieurs poussins à la fois, chaque convoyeur étant équipé d'une ou plusieurs cames rotatives placées sous la bande transporteuse du convoyeur correspondant, chaque came étant entraînée en rotation autour d'un axe placé transversalement, ou sensiblement transversalement, par rapport à la direction de déplacement définie par le convoyeur correspondant, chaque came étant conformée pour entrer périodiquement en contact avec la bande transporteuse du convoyeur correspondant et soulever ainsi une partie de celle-ci lors de ce contact.

Selon encore un autre mode de réalisation de cette installation pour déterminer automatiquement le sexe d'un poussin, elle comprend n convoyeurs à bande rectilignes disposés en série, n étant supérieur ou égal à 2, la sortie de chaque convoyeur débouchant ainsi sur l'entrée du convoyeur immédiatement suivant, l'ensemble de ces convoyeurs définissant un chemin de transport, chaque convoyeur comportant une ou plusieurs cames rotatives placées sous la bande transporteuse du convoyeur correspondant, chaque came étant entraînée en rotation autour d'un axe placé transversalement, ou sensiblement transversalement, par rapport à la direction de déplacement définie par le convoyeur correspondant, chaque came étant conformée pour entrer périodiquement en contact avec la bande transporteuse du convoyeur correspondant et soulever ainsi une partie de celle-ci lors de ce contact, seul le convoyeur placé le plus en aval, comprenant ledit au moins un dispositif d'imagerie et ladite au moins une source de lumière, ledit ou lesdits convoyeurs placés en amont de ce dernier permettant de préparer ledit poussin pour la détermination de son sexe sur le convoyeur placé le plus en aval.
On constate avantageusement qu'une telle phase d'apprentissage du poussin par son passage sur un ou plusieurs convoyeurs dits d'apprentissage, assure une réaction spontanée du poussin, et donc un déploiement de ses ailes plus rapide, sur le convoyeur placé le plus en aval au moment critique de la réalisation des opérations d'illumination et de capture d'images en vue de déterminer son sexe.

La présente invention concerne également un procédé pour la détermination automatique du sexe d'un poussin dans lequel on réalise les étapes suivantes :
- déplacer un poussin sur un convoyeur à bande comprenant une bande transporteuse sous tension, ledit convoyeur définissant une direction de déplacement du poussin,
- soulever momentanément au moins une partie de cette bande transporteuse sur laquelle le poussin est transporté librement pour générer au moins une surélévation de cette bande transporteuse telle qu'une bosse ou un plateau surélevés par rapport au reste de la bande transporteuse, afin de déséquilibrer ledit poussin et provoquer le déploiement volontaire de ses ailes, cette surélévation comportant au moins la portion de la bande avec laquelle ledit poussin est directement en contact,
- éclairer au moins une aile ainsi déployée dudit poussin, et
- détecter au moins une partie de la lumière réfléchie par ladite au moins une aile ainsi éclairée,
- traiter les images ainsi acquises afin d'isoler sur au moins certaines de ces images l'extrémité d'au moins une des ailes dudit poussin, analyser la configuration des plumes à ladite au moins une extrémité et déterminer à partir de cette configuration s'il s'agit d'un poussin mâle ou femelle ou encore si le sexe est indéterminé.

De préférence, cette bande transporteuse est souple.

Selon un mode de réalisation de ce procédé de détermination automatique du sexe d'un poussin, ladite au moins une partie de bande transporteuse est soulevée par une ou plusieurs cames rotatives placées sous ladite bande transporteuse, chaque came étant entraînée en rotation autour d'un axe placé transversalement, ou sensiblement transversalement, par rapport à ladite direction de déplacement, chaque came étant conformée pour entrer périodiquement en contact avec ladite bande transporteuse et soulever ainsi une partie de celle-ci lors de ce contact

Selon un autre mode de réalisation de ce procédé de détermination automatique du sexe d'un poussin, ladite au moins une partie de bande transporteuse étant soulevée par deux cames rotatives placées sous ladite bande transporteuse, les fonctionnements de la première came et de la seconde came sont synchronisés.
Alternativement, ladite au moins une partie de bande transporteuse étant soulevée par deux cames rotatives placées sous ladite bande transporteuse, les fonctionnements de la première came et de la seconde came sont asynchrones. Les cames peuvent être identiques ou non.

Selon encore un autre mode de réalisation de ce procédé de détermination automatique du sexe d'un poussin, le châssis du convoyeur à bande étant configurée pour que ladite bande transporteuse soit conduite en forme d'auge afin de centrer automatiquement ledit poussin lors de son transport, on soulève une partie de ladite bande transporteuse pour la faire passer d'une première configuration dite libre, en forme d'auge, à une seconde configuration dite à plat ou sensiblement à plat, dans laquelle ladite partie de bande transporteuse est plate ou sensiblement plate.

Selon encore un autre mode de réalisation de ce procédé de détermination automatique du sexe d'un poussin, la ou chaque partie de la bande transporteuse ainsi soulevée présente une élévation comprise entre 8 mm et 16 mm par rapport au reste de la surface externe de ladite bande transporteuse.

Selon un autre mode de réalisation de ce procédé de détermination automatique du sexe d'un poussin, on ajuste la fréquence de rotation de la ou des cames rotatives placées sous la bande transporteuse d'un convoyeur à bande rectiligne, pour une vitesse de défilement donnée de cette bande transporteuse afin d'obtenir un déploiement spontané maximal des ailes du poussin.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**
   [Fig. 1] montre des vues de l'extrémité d'une aile d'un poussin femelle ;
**Fig. 2**
   [Fig. 2] montre des vues de l'extrémité d'une aile d'un poussin mâle ;
**Fig. 3**

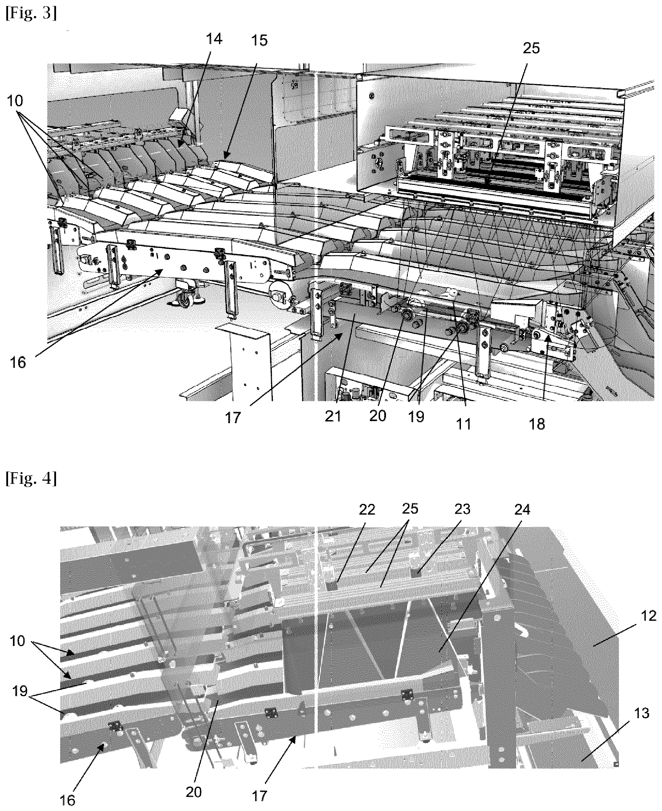

   [Fig. 3] est une représentation schématique partielle d'une installation de détermination automatique du sexe d'un poussin selon un mode de réalisation particulier de la présente invention ;
**Fig. 4**
   [Fig. 4] est une autre vue partielle de l'installation de détermination automatique du sexe d'un poussin de la Fig. 3, la bande transporteuse est représentée partiellement pour mieux faire apparaître les cames rotatives ;
**Fig. 5**

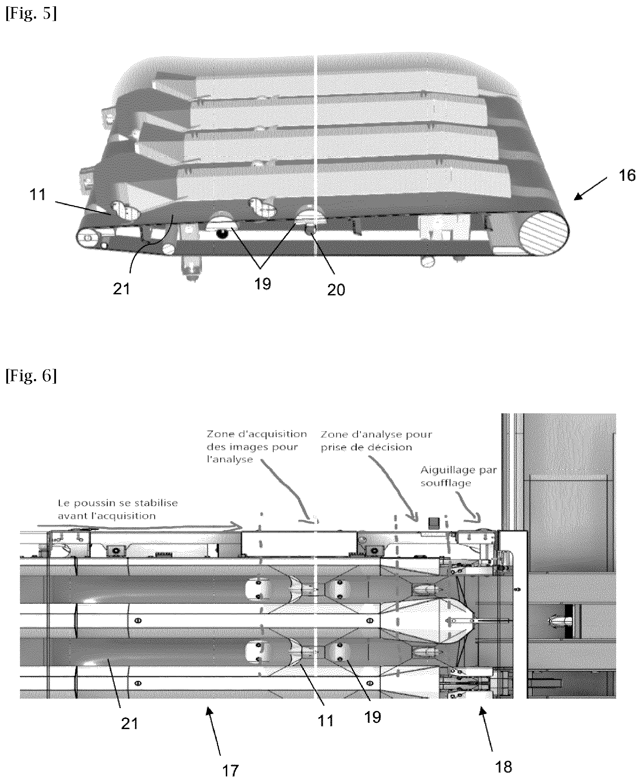

   [Fig. 5] est une vue partielle et en coupe des seuls convoyeurs de l'installation de détermination du sexe d'un poussin de la Fig. 3 ;
**Fig. 6**
   [Fig. 6] est une vue partielle de dessus de l'installation de détermination automatique du sexe d'un poussin de la Fig. 3, montrant la zone de sortie de cette installation, la bande transporteuse est représentée partiellement pour mieux faire apparaître les cames rotatives ;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 3 à 6 illustrent de manière schématique et partielle une installation de détermination automatique du sexe d'un poussin selon un mode de réalisation particulier de la présente invention.

Cette installation comporte plusieurs lignes de traitement 10 identiques disposées en parallèle en vue de déterminer le sexe d'une pluralité de poussins en même temps. Le nombre de ces lignes de traitement 10 n'est pas limité.

D'autre part, chaque ligne de traitement 10 de cette installation comporte plusieurs convoyeurs rectilignes qui sont disposés en série, lesquels définissent ainsi une direction de déplacement, ou axe de transport, des poussins 11 jusqu'à des convoyeurs 12, 13 d'évacuation destinés à transporter chacun des poussins de même sexe, après différentiation et séparation de ces derniers en fonction de leur sexe.

Sur chaque ligne de traitement 10, un premier convoyeur 14, placé en amont de la ligne, est configuré pour permettre d'organiser et placer en file indienne des poussins déposés en vrac à l'entrée de ce premier convoyeur 14.

La sortie de ce premier convoyeur 14 débouche sur un second convoyeur 15 dit de séparation, et dont la vitesse de transport est supérieure à la vitesse de transport du premier convoyeur 14 pour assurer une séparation spatiale des poussins.

La sortie de ce second convoyeur 15 débouche sur l'entrée d'un troisième convoyeur 16 rectiligne dit « d'apprentissage du poussin ». Un seul convoyeur d'apprentissage est représenté ici mais l'installation pourrait comporter un ou plusieurs autres convoyeurs 16 dits d'apprentissage du poussin afin de renforcer l'apprentissage de ce dernier.

La sortie de ce troisième convoyeur 16 débouche quant à elle sur l'entrée d'un quatrième 17 convoyeur dit « d'identification du sexe du poussin ». Ce quatrième 17 convoyeur à bande est configuré pour permettre la capture proprement dite d'une ou plusieurs images d'au moins une aile déployée de chaque poussin transporté par ce convoyeur.

La sortie de ce quatrième convoyeur 17 débouche sur un poste 18 de tri des poussins en fonction de leur sexe, préalablement identifié par la capture d'images et le traitement de ces images avec un algorithme approprié, en vue de leur évacuation vers des postes de traitement adaptés au sexe du poussin 11.

Chacun de ces convoyeurs à bande comprend une bande transporteuse souple sous tension. Ces convoyeurs à bande sont horizontaux.

Les châssis des deuxième, troisième et quatrième convoyeurs 15-17 à bande sont configurés de sorte que leur bande transporteuse soit conduite en forme d'auge pour centrer automatiquement un poussin lors de son transport. Le poussin 11 étant libre et seulement porté par ses pattes lorsqu'il est en équilibre sur la bande transporteuse correspondante.

Les troisième et quatrième convoyeurs 16, 17 comprennent de plus chacun deux cames 19 rotatives, placées sous leur bande transporteuse 20, en étant espacées l'une de l'autre. Ces cames rotatives 19 sont entraînées en rotation autour d'un axe 20 placé perpendiculairement à la direction de déplacement.

Ces cames rotatives 19 sont de plus identiques et synchronisées au niveau de chaque convoyeur 16, 17. Chaque came 19 rotative comporte ainsi une zone de profil actif de forme demi-cylindrique, la partie arrondie étant tournée vers l'extérieur. La configuration de la zone de profil actif de la came assure une mise en contact périodique, ici à chaque tour, avec la bande transporteuse 21 du convoyeur 16, 17 correspondant.

Une telle mise en contact de la zone de profil actif de chaque came rotative 19 permet ainsi de soulever temporairement une portion de cette bande transporteuse 21 de manière à amener le poussin 11 à déployer volontairement ses ailes, lorsque ce dernier se trouve sur ladite portion de bande transporteuse qui est ainsi soulevée.

Il s'agit bien d'un soulèvement temporaire d'une portion de la bande transporteuse 21, ce soulèvement n'existant que pendant l'espace de temps pendant lequel la zone de profil actif de la came 19 rotative est en contact avec la bande transporteuse 21.

Lorsque la zone de profil actif s'éloigne de la bande transporteuse 21, du fait de la rotation de la came 19 correspondante, la bande transporteuse n'est plus en contact avec la came rotative et retrouve dès lors sa configuration initiale, c'est-à-dire en forme d'auge.

Sur chacun des troisième et quatrième convoyeurs 16, 17, les deux cames 19 rotatives sont agencées pour surélever une portion de la bande transporteuse 21, cette surélévation présentant une section longitudinale droite de forme sensiblement trapézoïdale (montée, plateau, descente). Cette surélévation d'une partie de la bande transporteuse présente ici une élévation comprise entre 17 et 25 mm.

L'objectif du troisième convoyeur 16 rectiligne est d'entraîner le poussin à déployer plus efficacement ses ailes et ce, de manière impulsive, lorsqu'ils rencontrent la même surélévation sur le quatrième convoyeur 17 rectiligne.

De manière avantageuse, on s'assure ainsi d'un déploiement spontané des ailes du poussin 11 au moment de la réalisation des opérations d'éclairement et de capture d'une ou plusieurs images en vue de déterminer son sexe.

Cette installation comporte des sources 25 de lumière qui sont placées de part et d'autre de la bande transporteuse et au-dessus de celle-ci pour éclairer les ailes du poussin ainsi déployées. Ces sources 25 de lumière sont configurées pour émettre de la lumière violette à une longueur d'onde comprise entre 380 nm et 420 nm, et encore mieux, de la lumière violette à une longueur d'onde centrée sur 405 nm.

Cette installation comporte également deux caméras matricielles 22, 23 placées au-dessus d'une partie avale de ce quatrième convoyeur 17 en étant espacées l'une de l'autre le long de ce convoyeur.

Ces caméras matricielles 22, 23 sont agencées de sorte que le champ de vision d'une première 22 de ces caméras couvre une première zone de la bande transporteuse 21 dont au moins une majorité est placée en aval de la première came 19 rotative, tandis que le champ de vision de l'autre caméra 23 matricielle couvre une seconde zone de la bande transporteuse 21 placée en aval de cette première zone.

Plus précisément, cette seconde zone de la bande transporteuse 21 ainsi couverte par le champ 24 de vision de la seconde caméra 23 matricielle comporte à la fois une extrémité de cette première zone de bande transporteuse imagée par la première caméra 22 matricielle et une zone de la bande transporteuse placée en aval de la seconde came 19 rotative de sorte qu'il y ait recouvrement entre ces deux zones de la bande transporteuse 21 imagées.

De plus, le champ de vision de la seconde caméra 23 matricielle couvre la zone de sortie du quatrième convoyeur 17 rectiligne.

Il est ainsi possible d'assurer un suivi individuel de chaque poussin 11 depuis son entrée sur la portion de la bande transporteuse surélevée jusqu'à sa sortie du quatrième convoyeur 17 rectiligne.

Au niveau de la zone de sortie du quatrième convoyeur 17 rectiligne, est placé un dispositif 18 d'éjection configuré pour envoyer le poussin 11 sortant vers un premier 12 convoyeur de traitement ou vers un second 13 convoyeur de traitement distinct du premier, en fonction du sexe du poussin identifié après traitement des images acquises par les caméras matricielles 22, 23.

Ce dispositif d'éjection comporte ici une ou plusieurs soufflettes (non représentées), ou dispositifs pour produire un jet d'air sous pression, pour diriger, ou aiguiller, un poussin 11 vers un chemin de sortie pré-établi en fonction de son sexe.

Bien entendu, la distance séparant la seconde came 19 rotative de ce dispositif 18 d'éjection est déterminée pour que l'algorithme de traitement des images capturées des ailes du poussin dispose du temps nécessaire pour identifier le sexe de ce poussin 11.

Des tests ont été réalisés avec l'installation ci-dessus décrite afin de démontrer les bons résultats obtenus avec celle-ci, dans la détermination du sexe d'un poussin 11.

Selon un premier mode de mise en œuvre, les cames 19 rotatives placées sous la bande transporteuse 21 d'un convoyeur rectiligne dit « d'acquisition des images » sont configurées pour soulever une partie de la bande transporteuse correspondante d'une hauteur maximale de 33 mm par rapport au reste de la surface externe de cette bande transporteuse.

La vitesse de rotation (tour par minute = tpm) de ces cames 19 rotatives est fixée à 1800 tours par minute.

Chacune de ces cames 19 rotatives, présente ici une seule zone de profil actif ayant une forme demi-cylindrique.

On constate avantageusement dans ce mode de mise en œuvre, un taux d'erreur moyen sur l'identification du sexe du poussin très faible.

Selon un autre mode de mise en œuvre, la paire de cames 19 rotatives placées sous la bande transporteuse d'un premier convoyeur à bande rectiligne dit « d'apprentissage du poussin » et la paire de cames 19 rotatives placées sous la bande transporteuse 21 d'un second convoyeur à bande rectiligne dit « d'acquisition des images » sont identiques et configurées de sorte qu'une première des cames rotatives de chaque paire, placée en amont du convoyeur correspondant, est configurée pour soulever une partie de la bande transporteuse correspondante d'une hauteur d'environ 25 mm par rapport au reste de la surface externe de cette bande transporteuse, tandis que l'autre came de la paire, placée en aval, est configurée pour soulever une partie de la bande transporteuse correspondante d'une hauteur d'environ 33 mm.

De plus, la vitesse de rotation (tour par minute = tpm) des cames 19 rotatives du convoyeur dit « d'apprentissage du poussin » est fixée à 1500 tours par minute tandis que la vitesse de rotation des cames 19 rotatives du second convoyeur dit « d'acquisition des images » est fixée à 2400 tours par minute.

On constate également dans ce mode de mise en œuvre, un taux d'erreur moyen sur l'identification du sexe du poussin très faible.

Selon encore un autre mode de mise en œuvre de l'invention, la paire de cames 19 rotatives placées sous la bande transporteuse d'un premier convoyeur à bande rectiligne dit « d'apprentissage du poussin » et la paire de cames 19 rotatives placées sous la bande transporteuse 21 d'un second convoyeur à bande rectiligne dit « d'acquisition des images » sont identiques et configurées de sorte qu'une première des cames de chaque paire, placée en amont du convoyeur correspondant, est configurée pour soulever une partie de la bande transporteuse correspondante d'une hauteur d'environ 25 mm par rapport au reste de la surface externe de cette bande transporteuse, tandis que l'autre came de la paire, placée en aval, est configurée pour soulever une partie de la bande transporteuse correspondante d'une hauteur d'environ 17 mm.

De plus, la vitesse de rotation (tour par minute = tpm) des cames 19 rotatives du premier convoyeur est fixée à 1800 tours par minute tandis que la vitesse de rotation des cames 19 rotatives du second convoyeur est fixée à 3000 tours par minute.

On constate là encore, dans ce mode de mise en œuvre, un taux d'erreur moyen sur l'identification du sexe du poussin très faible.

On notera que la fréquence des cames 19 rotatives sur le second convoyeur rectiligne dit d'acquisition des images, ou encore de captures d'images des ailes déployées, est toujours plus élevée que la fréquence des cames rotatives sur le premier convoyeur dit « d'apprentissage », car on souhaite provoquer le plus grand déséquilibre dans la zone de capture d'une ou plusieurs images des ailes déployées du poussin.

## Revendications

1. Installation pour déterminer automatiquement le sexe d'un poussin, comprenant
- un convoyeur à bande comprenant une bande transporteuse (21) sous tension pour transporter de manière libre ledit poussin, ladite bande transporteuse (21) définissant une direction de déplacement,
- un dispositif pour déséquilibrer le poussin et l'amener à déployer volontairement ses ailes lors de son déplacement le long d'au moins une partie dudit convoyeur à bande,
- au moins une source de lumière (25) pour éclairer les ailes du poussin ainsi déployées,
- au moins un dispositif d'imagerie (22, 23) pour capturer une ou plusieurs images des ailes du poussin ainsi éclairées,
- une unité centrale configurée pour traiter les images acquises par ledit au moins un dispositif d'imagerie (22, 23) afin d'isoler sur au moins certaines de ces images l'extrémité d'au moins une des ailes dudit poussin, analyser la configuration des plumes à ladite au moins une extrémité et déterminer à partir de cette configuration s'il s'agit d'un poussin mâle ou femelle ou encore si le sexe est indéterminé,
**caractérisée en ce que** ledit dispositif pour déséquilibrer le poussin et l'amener à déployer volontairement ses ailes comporte au moins une came rotative (19) placée sous ladite bande transporteuse (21), chaque came étant entraînée en rotation autour d'un axe (20) placé transversalement, ou sensiblement transversalement, par rapport à ladite direction de déplacement, ladite came étant conformée pour entrer périodiquement en contact avec ladite bande transporteuse (21) et soulever ainsi une partie de celle-ci lors de ce contact.

2. Installation selon la revendication 1, **caractérisée en ce que** chaque came (19) rotative comporte au moins une zone de profil actif, lesdites zones de profil actif entrant en contact avec ladite bande transporteuse (21) l'une après l'autre pendant la rotation de la came correspondante, ladite ou lesdites zones de profil actif de ladite came étant conformées pour garantir que cette dernière reste hors de contact avec cette bande transporteuse (21) pendant au moins une partie de sa rotation.

3. Installation selon la revendication 1 ou 2, **caractérisée en ce que** chaque came (19) rotative comporte au moins une zone de profil actif arrondie, telle que semi-cylindrique.

4. Installation selon l'une quelconque des revendications 1 à 3, **caractérisée en ce qu'**elle comporte deux cames (19) rotatives, placées sous ladite bande transporteuse (21) en étant espacées l'une de l'autre le long de la direction de déplacement définie par ledit convoyeur, chacune de ces cames étant entraînée en rotation autour d'un axe (20) placé transversalement, ou sensiblement transversalement, par rapport à ladite direction de déplacement, chaque came étant conformée pour entrer périodiquement en contact avec ladite bande transporteuse (21) et soulever ainsi une partie de celle-ci lors de ce contact de manière à amener ledit poussin à déployer volontairement ses ailes lorsque ce dernier se trouve dans ladite partie de bande transporteuse (21) ainsi soulevée.

5. Installation selon l'une quelconque des revendications précédentes, **caractérisée en ce que** lesdites cames (19) rotatives étant identiques, ladite installation est configurée pour faire fonctionner celles-ci de manière synchrone ou de manière asynchrone.

6. Installation selon l'une quelconque des revendications précédentes, **caractérisée en ce que** le châssis dudit convoyeur à bande est configuré de sorte que ladite bande transporteuse (21) soit conduite en forme d'auge pour centrer automatiquement ledit poussin lors de son transport.

7. Installation selon les revendications 4 ou 5 et 6, **caractérisée en ce que** ladite première came et ladite deuxième came sont espacées l'une de l'autre et conformées pour déplacer la partie de la bande transporteuse (21) placée entre lesdites cames entre une configuration libre, ou sans contact, en forme d'auge et une configuration soulevée à plat, ou sensiblement à plat, pour que ledit poussin suive au moins partiellement une trajectoire rectiligne ou sensiblement rectiligne.

8. Installation selon l'une quelconque des revendications précédentes, **caractérisée en ce que** chaque came (19) rotative est configurée pour lors de sa rotation, soulever une partie de ladite bande transporteuse (21) et transmettre une impulsion audit poussin (11) placée sur ladite partie de bande transporteuse (21) afin de propulser ce dernier en l'air au-dessus de ladite bande transporteuse (21).

9. Installation selon la revendication 8, **caractérisée en ce que** ledit convoyeur comportant deux cames (19) rotatives et au moins deux caméras matricielles (22, 23) espacées le long dudit convoyeur, le champ de vision d'une première (22) desdites caméras couvre une première zone de la bande transporteuse (21) dont au moins une majorité est placée en aval de la première came (19) rotative, et le champ de vision (24) d'une deuxième (23) caméra couvre une deuxième zone de la bande transporteuse (21) recouvrant ou non une partie de ladite première zone de bande transporteuse (21), une portion de ladite deuxième zone de la bande transporteuse (21) ainsi imagée, étant placée en aval de la seconde came (19) rotative.

10. Installation selon l'une quelconque des revendications précédentes, **caractérisée en ce que** ledit convoyeur comporte dans sa zone de sortie, un dispositif (18) d'éjection du poussin configuré pour envoyer ce dernier vers un premier (12) convoyeur de traitement ou vers un second (13) convoyeur de traitement distinct du premier, en fonction du sexe du poussin identifié lors du traitement desdites images.

11. Installation selon les revendications 9 et 10, **caractérisée en ce que** le champ de vision de la deuxième (23) caméra matricielle couvre également ladite zone de sortie dudit convoyeur pour assurer un suivi individuel du poussin au moins jusqu'à son arrivée, ou passage, au niveau du dispositif (18) d'éjection.

12. Installation selon l'une quelconque des revendications précédentes, **caractérisée en ce qu'**elle comprend au moins deux convoyeurs à bande disposés parallèlement l'un à l'autre pour traiter plusieurs poussins à la fois, chaque convoyeur étant équipé d'une ou plusieurs cames (19) rotatives placées sous la bande transporteuse (21) du convoyeur correspondant, chaque came étant entraînée en rotation autour d'un axe (20) placé transversalement, ou sensiblement transversalement, par rapport à la direction de déplacement définie par le convoyeur correspondant, chaque came étant conformée pour entrer périodiquement en contact avec la bande transporteuse (21) du convoyeur correspondant et soulever ainsi une partie de celle-ci lors de ce contact.

13. Installation selon l'une quelconque des revendications précédentes, **caractérisée en ce qu'**elle comprend n convoyeurs à bande rectilignes disposés en série, n'étant supérieur ou égal à 2, la sortie de chaque convoyeur débouchant sur l'entrée du convoyeur immédiatement suivant, l'ensemble de ces convoyeurs définissant un chemin de transport, chaque convoyeur comportant une ou plusieurs cames rotatives placées sous la bande transporteuse (21) du convoyeur correspondant, chaque came étant entraînée en rotation autour d'un axe (20) placé transversalement, ou sensiblement transversalement, par rapport à la direction de déplacement, chaque came rotative (19) étant conformée pour entrer périodiquement en contact avec la bande transporteuse (21) de son convoyeur correspondant et soulever ainsi une partie de cette bande transporteuse (21) lors de ce contact, seul le convoyeur placé le plus en aval, comprend ledit au moins un dispositif d'imagerie (22, 23) et ladite au moins une source de lumière (25), ledit ou lesdits convoyeurs à bande placés en amont de ce dernier permettant de préparer ledit poussin pour la détermination de son sexe sur le convoyeur rectiligne placé le plus en aval.

14. Procédé pour la détermination automatique du sexe d'un poussin dans lequel on réalise les étapes suivantes :
- déplacer un poussin sur un convoyeur à bande comprenant une bande transporteuse (21) sous tension, ledit convoyeur définissant une direction de déplacement du poussin,
- soulever momentanément au moins une partie de cette bande transporteuse (21) sur laquelle le poussin est transporté librement pour générer au moins une surélévation de cette bande transporteuse (21) telle qu'une bosse ou un plateau surélevés par rapport au reste de la bande transporteuse (21), afin de déséquilibrer ledit poussin et provoquer le déploiement volontaire de ses ailes, cette surélévation comportant au moins la portion de la bande avec laquelle ledit poussin est directement en contact,
- éclairer au moins une aile ainsi déployée dudit poussin, et
- détecter la lumière réfléchie par ladite au moins une aile ainsi éclairée,
- traiter les images ainsi acquises afin d'isoler sur au moins certaines de ces images l'extrémité d'au moins une des ailes dudit poussin, analyser la configuration des plumes à ladite au moins une extrémité et déterminer à partir de cette configuration s'il s'agit d'un poussin mâle ou femelle ou encore si le sexe est indéterminé, et en ce que
- ladite au moins une partie de bande transporteuse (21) est soulevée par une ou plusieurs cames (19) rotatives placées sous ladite bande transporteuse (21), chaque came étant entraînée en rotation autour d'un axe (20) placé transversalement, ou sensiblement transversalement, par rapport à ladite direction de déplacement, chaque came étant conformée pour entrer périodiquement en contact avec ladite bande transporteuse (21) et soulever ainsi une partie de celle-ci lors de ce contact.

15. Procédé selon la revendication 14, **caractérisé en ce que** ladite au moins une partie de bande transporteuse (21) étant soulevée par deux cames (19) rotatives placées sous ladite bande transporteuse (21), les fonctionnements de la première came et de la seconde came sont synchronisés.

16. Procédé selon la revendication 14 ou 15, **caractérisé en ce que** le châssis du convoyeur à bande étant configurée pour que ladite bande transporteuse (21) soit conduite en forme d'auge afin de centrer automatiquement ledit poussin lors de son transport, on soulève une partie de ladite bande transporteuse (21) pour la faire passer d'une première configuration dite libre, en forme d'auge, à une seconde configuration dite à plat ou sensiblement à plat, dans laquelle ladite partie de bande transporteuse (21) est plate ou sensiblement plate.

## Patentansprüche

1. Anlage zum automatischen Bestimmen des Geschlechts eines Kükens, umfassend
- einen Bandförderer, umfassend ein unter Spannung stehendes Transportband (21) zum freien Transport des Kükens, wobei das Transportband (21) eine Bewegungsrichtung definiert,
- eine Vorrichtung zum Aus-dem-Gleichgewicht-Bringen des Kükens und zum Veranlassen desselben, seine Flügel während seiner Bewegung entlang mindestens eines Teils des genannten Bandförderers freiwillig auszubreiten,
- mindestens eine Lichtquelle (25) zum Beleuchten der so ausgebreiteten Flügel des Kükens,
- mindestens eine Bildgebungsvorrichtung (22, 23) zum Erfassen eines oder mehrerer Bilder der so beleuchteten Flügel des Kükens,
- eine zentrale Einheit, die konfiguriert ist, um die von der mindestens einen Bildgebungsvorrichtung (22, 23) erfassten Bilder zu verarbeiten, um auf mindestens einigen dieser Bilder das Ende mindestens eines der Flügel des Kükens zu isolieren, die Konfiguration der Federn an dem mindestens einen Ende zu analysieren und aus dieser Konfiguration zu bestimmen, ob es sich um ein männliches oder weibliches Küken handelt oder ob das Geschlecht unbestimmt ist,
**dadurch gekennzeichnet, dass** die Vorrichtung zum Aus-dem-Gleichgewicht-Bringen des Kükens und zum Veranlassen desselben, seine Flügel freiwillig auszubreiten, mindestens einen rotierenden Nocken (19) umfasst, der unter dem Transportband (21) angeordnet ist, wobei jeder Nocken um eine Achse (20) rotierend angetrieben wird, die quer, oder im Wesentlichen quer, relativ zu der Bewegungsrichtung angeordnet ist, wobei der Nocken angepasst ist, um periodisch mit dem Transportband (21) in Kontakt zu treten und so während des Kontakts einen Teil desselben anzuheben.

2. Anlage nach Anspruch 1, **dadurch gekennzeichnet, dass** jeder rotierende Nocken (19) mindestens einen aktiven Profilbereich umfasst, wobei die aktiven Profilbereiche während der Drehung des entsprechenden Nockens nacheinander mit dem Transportband (21) in Kontakt treten, wobei der oder die aktiven Profilbereiche des Nockens angepasst sind, um zu gewährleisten, dass dieser während mindestens eines Teils seiner Drehung außer Kontakt mit diesem Transportband (21) bleibt.

3. Anlage nach Anspruch 1 oder 2, **dadurch gekennzeichnet, dass** jeder rotierende Nocken (19) mindestens einen abgerundeten aktiven Profilbereich umfasst, wie einen halbzylindrischen.

4. Anlage nach einem der Ansprüche 1 bis 3,
**dadurch gekennzeichnet, dass** sie zwei rotierende Nocken (19) umfasst, die unter dem Transportband (21) angeordnet sind und entlang der durch den Förderer definierten Bewegungsrichtung voneinander beabstandet sind, wobei jeder dieser Nocken um eine Achse (20) rotierend angetrieben wird, die quer, oder im Wesentlichen quer, relativ zu der Bewegungsrichtung angeordnet ist, wobei jeder Nocken angepasst ist, um periodisch mit dem Transportband (21) in Kontakt zu treten und so einen Teil desselben während dieses Kontakts anzuheben, um das Küken zu veranlassen, seine Flügel freiwillig auszubreiten, wenn sich dieses in dem so angehobenen Teil des Transportbandes (21) befindet.

5. Anlage nach einem der vorstehenden Ansprüche,
**dadurch gekennzeichnet, dass** die rotierenden Nocken (19) identisch sind und die Anlage konfiguriert ist, um diese auf synchrone Weise oder asynchrone Weise zu betreiben.

6. Anlage nach einem der vorstehenden Ansprüche,
**dadurch gekennzeichnet, dass** das Gestell des Bandförderers so konfiguriert ist, dass das Transportband (21) muldenförmig geführt wird, um das Küken während seines Transports automatisch zu zentrieren.

7. Anlage nach den Ansprüchen 4 oder 5 und 6,
**dadurch gekennzeichnet, dass** der erste Nocken und der zweite Nocken voneinander beabstandet und angepasst sind, um den zwischen den Nocken angeordneten Teil des Transportbandes (21) zwischen einer freien oder kontaktlosen muldenförmigen Konfiguration und einer angehobenen flachen, oder im Wesentlichen flachen, Konfiguration zu bewegen, damit das Küken zumindest teilweise einer geradlinigen oder im Wesentlichen geradlinigen Bahn folgt.

8. Anlage nach einem der vorstehenden Ansprüche,
**dadurch gekennzeichnet, dass** jeder rotierende Nocken (19) konfiguriert ist, um während seiner Drehung einen Teil des Transportbandes (21) anzuheben und dem auf dem Teil des Transportbandes (21) angeordneten Küken (11) einen Impuls zu übertragen, um dieses in die Luft über das Transportband (21) zu schleudern.

9. Anlage nach Anspruch 8, **dadurch gekennzeichnet, dass** der Förderer zwei rotierende Nocken (19) und mindestens zwei Matrixkameras (22, 23) umfasst, die entlang des Förderers beabstandet sind, wobei das Sichtfeld einer ersten (22) der Kameras einen ersten Bereich des Transportbandes (21) abdeckt, von dem mindestens eine Mehrheit stromabwärts des ersten rotierenden Nockens (19) angeordnet ist, und das Sichtfeld (24) einer zweiten (23) Kamera einen zweiten Bereich des Transportbandes (21) abdeckt, der einen Teil des ersten Bereichs des Transportbandes (21) überlappt oder nicht überlappt, wobei ein Abschnitt des so abgebildeten zweiten Bereichs des Transportbandes (21) stromabwärts des zweiten rotierenden Nockens (19) angeordnet ist.

10. Anlage nach einem der vorstehenden Ansprüche,
**dadurch gekennzeichnet, dass** der Förderer in seinem Ausgangsbereich eine Vorrichtung (18) zum Ausstoß des Kükens aufweist, die konfiguriert ist, um dieses zu einem ersten (12) Behandlungsförderer oder zu einem zweiten (13) Behandlungsförderer zu befördern, der sich vom ersten unterscheidet, in Abhängigkeit vom Geschlecht des Kükens, das bei der Verarbeitung der Bilder identifiziert wurde.

11. Anlage nach den Ansprüchen 9 und 10, **dadurch gekennzeichnet, dass** das Sichtfeld der zweiten (23) Matrixkamera auch den Ausgangsbereich des Förderers abdeckt, um eine individuelle Verfolgung des Kükens mindestens bis zu seiner Ankunft oder seinem Durchgang auf Höhe der Vorrichtung (18) zum Ausstoß zu gewährleisten.

12. Anlage nach einem der vorstehenden Ansprüche,
**dadurch gekennzeichnet, dass** sie mindestens zwei parallel zueinander angeordnete Bandförderer zum gleichzeitigen Behandeln mehrerer Küken umfasst, wobei jeder Förderer mit einem oder mehreren rotierenden Nocken (19) ausgestattet ist, die unter dem Transportband (21) des entsprechenden Förderers angeordnet sind, wobei jeder Nocken um eine Achse (20) rotierend angetrieben wird, die quer, oder im Wesentlichen quer, relativ zu der durch den entsprechenden Förderer definierten Bewegungsrichtung angeordnet ist, wobei jeder Nocken angepasst ist, um periodisch mit dem Transportband (21) des entsprechenden Förderers in Kontakt zu treten und so einen Teil desselben während dieses Kontakts anzuheben.

13. Anlage nach einem der vorstehenden Ansprüche,
**dadurch gekennzeichnet, dass** sie n geradlinige Bandförderer umfasst, die in Reihe angeordnet sind, wobei n größer oder gleich 2 ist, wobei der Ausgang jedes Förderers in den Eingang des unmittelbar folgenden Förderers mündet, wobei die Gesamtheit dieser Förderer einen Transportweg definiert, wobei jeder Förderer einen oder mehrere rotierende Nocken umfasst, die unter dem Transportband (21) des entsprechenden Förderers angeordnet sind, wobei jeder Nocken für die Rotation um eine Achse (20) angetrieben wird, die quer, oder im Wesentlichen quer, relativ zu der Bewegungsrichtung angeordnet ist, wobei jeder rotierende Nocken (19) angepasst ist, um periodisch mit dem Transportband (21) seines entsprechenden Förderers in Kontakt zu treten und so einen Teil dieses Transportbandes (21) während dieses Kontakts anzuheben, wobei nur der am weitesten stromabwärtig angeordnete Förderer die mindestens eine Bildgebungsvorrichtung (22, 23) und die mindestens eine Lichtquelle (25) umfasst, wobei der oder die stromaufwärtig von diesem angeordneten Bandförderer es ermöglichen, das Küken für die Bestimmung seines Geschlechts auf dem am weitesten stromabwärtig angeordneten geradlinigen Förderer vorzubereiten.

14. Verfahren zum automatischen Bestimmen des Geschlechts eines Kükens, wobei die folgenden Schritte durchgeführt werden:
- Bewegen eines Kükens auf einem Bandförderer, der ein Transportband (21) unter Spannung umfasst, wobei der Förderer eine Bewegungsrichtung des Kükens definiert,
- momentanes Anheben mindestens eines Teils dieses Transportbandes (21), auf dem das Küken frei transportiert wird, um mindestens eine Erhöhung dieses Transportbandes (21) zu erzeugen, wie eine Beule oder ein Plateau, die relativ zu dem Rest des Transportbandes (21) erhöht ist, um das Küken aus dem Gleichgewicht zu bringen und die freiwillige Ausbreitung seiner Flügel zu bewirken, wobei diese Erhöhung mindestens den Abschnitt des Bandes umfasst, mit dem das Küken direkt in Kontakt steht,
- Beleuchten mindestens eines so ausgebreiteten Flügels des Kükens, und
- Detektieren des von dem mindestens einen so beleuchteten Flügel reflektierten Lichts,
- Verarbeiten der so erfassten Bilder, um auf mindestens einigen dieser Bilder das Ende mindestens eines der Flügel des Kükens zu isolieren, Analysieren der Konfiguration der Federn an dem mindestens einen Ende, und Bestimmen aus dieser Konfiguration, ob es sich um ein männliches oder weibliches Küken handelt oder ob das Geschlecht unbestimmt ist, und dadurch, dass
- der mindestens eine Teil des Transportbandes (21) durch einen oder mehrere unter dem Transportband (21) angeordnete rotierende Nocken (19) angehoben wird, wobei jeder Nocken um eine quer, oder im Wesentlichen quer, relativ zu der Bewegungsrichtung angeordnete Achse (20) rotierend angetrieben wird, wobei jeder Nocken angepasst ist, um periodisch mit dem Transportband (21) in Kontakt zu treten und so einen Teil desselben während dieses Kontakts anzuheben.

15. Verfahren nach Anspruch 14, **dadurch gekennzeichnet, dass** der Betrieb des ersten Nockens und des zweiten Nockens synchronisiert sind, wobei mindestens ein Teil des Transportbandes (21) durch zwei unter dem Transportband (21) angeordnete rotierende Nocken (19) angehoben wird.

16. Verfahren nach Anspruch 14 oder 15, **dadurch gekennzeichnet, dass** das Gestell des Bandförderers konfiguriert ist, damit das Transportband (21) muldenförmig geführt wird, um das Küken während seines Transports automatisch zu zentrieren, wobei ein Teil des Transportbandes (21) angehoben wird, um es von einer ersten freien, muldenförmigen Konfiguration in eine zweite flache oder im Wesentlichen flache Konfiguration zu überführen, in der der Teil des Transportbandes (21) flach oder im Wesentlichen flach ist.

## Claims

1. System for automatically determining the sex of a chick, comprising
- a belt conveyor comprising a conveyor belt (21) under tension for freely transporting said chick, said conveyor belt (21) defining a movement direction,
- a device for unbalancing the chick and causing it to voluntarily spread its wings as it moves along at least a portion of said belt conveyor,
- at least one light source (25) for illuminating the thusly spread wings of the chick,
- at least one imaging device (22, 23) for capturing one or more images of the thusly illuminated wings of the chick,
- a central unit configured to process the images acquired by said at least one imaging device (22, 23), so as to isolate the tip of at least one of the wings of said chick in at least some of these images, analyze the configuration of the feathers at said at least one tip, and determine from this configuration whether it is a male chick or a female chick or else whether the sex is undetermined,
**characterized in that** said device for unbalancing the chick and causing it to voluntarily spread its wings has at least one rotating cam (19) positioned under said conveyor belt (21), each cam being rotated about an axle (20) positioned transversely, or substantially transversely, with respect to said movement direction, said cam being shaped so as to periodically come into contact with said conveyor belt (21) and thus raise a portion thereof during this contact.

2. System according to claim 1, **characterized in that** each rotating cam (19) has at least one active-profile zone, said active-profile zones coming into contact with said conveyor belt (21) one after the other during the rotation of the corresponding cam, said active-profile zone or zones of said cam being shaped so as to ensure that said cam remains out of contact with this conveyor belt (21) during at least part of its rotation.

3. System according to claim 1 or 2, **characterized in that** each rotating cam (19) has at least one rounded active-profile zone, such as a semi-cylindrical active-profile zone.

4. System according to any one of claims 1 to 3, **characterized in that** it has two rotating cams (19) positioned under said conveyor belt (21) and spaced apart in the movement direction defined by said conveyor, each of these cams being rotated about an axle (20) positioned transversely, or substantially transversely, with respect to said movement direction, each cam being shaped so as to periodically come into contact with said conveyor belt (21) and thus raise a portion thereof during this contact so as to cause said chick to voluntarily spread its wings when it is in said thusly raised portion of conveyor belt (21).

5. System according to any one of the preceding claims,
**characterized in that** said rotating cams (19) are identical, said system being configured to operate them synchronously or asynchronously.

6. System according to any one of the preceding claims,
**characterized in that** the frame of said belt conveyor is configured such that said conveyor belt (21) is directed in the shape of a trough in order to automatically center said chick as it is transported.

7. System according to claims 4 or 5 and 6, **characterized in that** said first cam and said second cam are spaced apart and shaped so as to move the portion of the conveyor belt (21) positioned between said cams between a free, or non-contacting, trough-shaped configuration and a raised flat, or substantially flat, configuration in order that said chick at least partially follows a rectilinear or substantially rectilinear trajectory.

8. System according to any one of the preceding claims, **characterized in that** each rotating cam (19) is configured to raise, as it rotates, a portion of said conveyor belt (21) and to transmit an impulse, positioned on said portion of conveyor belt (21), to said chick (11) so as to propel said chick into the air above said conveyor belt (21).

9. System according to claim 8, **characterized in that** said conveyor has two rotating cams (19) and at least two matrix cameras (22, 23) spaced along said conveyor, the field of view of a first (22) of said cameras covering a first zone of the conveyor belt (21), at least a majority of which is positioned downstream of the first rotating cam (19), and the field (24) of view of a second camera (23) covering a second zone of the conveyor belt (21), which may or may not overlap a portion of said first zone of conveyor belt (21), a portion of said second zone of the conveyor belt (21) thus imaged being positioned downstream of the second rotating cam (19).

10. System according to any one of the preceding claims,
**characterized in that** said conveyor has, in the outlet zone thereof, a device (18) for ejecting the chick, configured to send said chick to a first processing conveyor (12) or to a second processing conveyor (13) distinct from the first, depending on the sex of the chick identified during processing of said images.

11. System according to claims 9 and 10, **characterized in that** the field of view of the second matrix camera (23) also covers said outlet zone of said conveyor in order to ensure individual tracking of the chick at least until it arrives at, or passes through, the ejection device (18).

12. System according to any one of the preceding claims,
**characterized in that** it comprises at least two belt conveyors arranged parallel to one another in order to process a plurality of chicks at the same time, each conveyor being equipped with one or more rotating cams (19) positioned under the conveyor belt (21) of the corresponding conveyor, each cam being rotated about an axle (20) positioned transversely, or substantially transversely, with respect to the movement direction defined by the corresponding conveyor, each cam being shaped so as to periodically come into contact with the conveyor belt (21) of the corresponding conveyor and thus raise a portion thereof during this contact.

13. System according to any one of the preceding claims,
**characterized in that** it comprises n rectilinear belt conveyors arranged in series, n being greater than or equal to 2, the outlet of each conveyor opening onto the inlet of the immediately following conveyor, all of these conveyors defining a transport path, each conveyor having one or more rotating cams positioned under the conveyor belt (21) of the corresponding conveyor, each cam being rotated about an axle (20) positioned transversely, or substantially transversely, with respect to the movement direction, each rotating cam (19) being shaped so as to periodically come into contact with the conveyor belt (21) of the corresponding conveyor and thus raise a portion of this conveyor belt (21) during this contact, only the conveyor positioned furthest downstream comprising said at least one imaging device (22, 23) and said at least one light source (25), said belt conveyor or conveyors positioned upstream thereof allowing said chick to be prepared for the sex thereof to be determined on the rectilinear conveyor positioned furthest downstream.

14. Method for automatically determining the sex of a chick, wherein the following steps are carried out:
- moving a chick on a belt conveyor comprising a conveyor belt (21) under tension, said conveyor defining a movement direction of the chick,
- momentarily raising at least a portion of this conveyor belt (21) on which the chick is freely transported, in order to generate at least one elevation on this conveyor belt (21) such as a bump or plateau raised relative to the rest of the conveyor belt (21), so as to unbalance said chick and cause it to voluntarily spread its wings, this elevation having at least the portion of the belt with which said chick is directly in contact,
- illuminating at least one thusly spread wing of said chick, and
- detecting the light reflected by said at least one thusly illuminated wing,
- processing the thusly acquired images so as to isolate the tip of at least one of the wings of said chick in at least some of these images, analyze the configuration of the feathers at said at least one tip, and determine from this configuration whether it is a male chick or a female chick or else whether the sex is undetermined, and in that
- said at least one portion of conveyor belt (21) is raised by one or more rotating cams (19) positioned under said conveyor belt (21), each cam being rotated about an axle (20) positioned transversely, or substantially transversely, with respect to said movement direction, each cam being shaped so as to periodically come into contact with said conveyor belt (21) and thus raise a portion thereof during this contact.

15. Method according to claim 14, **characterized in that** said at least one portion of conveyor belt (21) is raised by two rotating cams (19) positioned under said conveyor belt (21), the operations of the first cam and the second cam being synchronized.

16. Method according to claim 14 or 15, **characterized in that** the frame of the belt conveyor is configured so that said conveyor belt (21) is directed in the shape of a trough in order to automatically center said chick as it is transported, a portion of said conveyor belt (21) being raised in order to switch it from a first, trough-shaped configuration referred to as the free configuration to a second configuration referred to as the flat or substantially flat configuration, wherein said portion of conveyor belt (21) is flat or substantially flat.
